# EUROPÄISCHE PATENTANMELDUNG

(11) **EP 2 239 827 A1**
(43) Veröffentlichungstag der Anmeldung: **13.10.2010**
(21) Anmeldenummer: 09157598.5
(22) Anmeldetag: 08.04.2009
(51) Int. Cl.: H02K 1/32, H02K 15/02, H02K 17/16

(54) **Abstandshalter und Verfahren zum Herstellen eines Rotoraktivteils einer elektrischen Maschine**

(71) Anmelder: Siemens Aktiengesellschaft, 80333 München (DE)
(72) Erfinder: Gömmel, Gerhard, 92353 Postbauer-Heng (DE); Jähnichen, Thomas, 01129 Dresden (DE); Sinterhauf, Peter, 90469 Nürnberg (DE); Stoklossa, Peter, 91126 Schwabach (DE)

(57) **Zusammenfassung**

Die Herstellung von belüfteten Rotoraktivteilen von elektrischen Maschinen, insbesondere von radial belüfteten Rotoren, soll vereinfacht und verbessert werden. Dies gelingt durch einen Abstandshalter (1) zum Beabstanden von Dynamoblechen (23) eines Rotoraktivteils einer dynamoelektrischen elektrischen Maschine, mit folgenden Merkmalen:
- einer Vielzahl von Hülsenelementen (3) wobei ein äußeres Rahmenelement (2) die Hülsenelemente (3) umgibt, und die Hülsenelemente (3) mit dem äußeren Rahmenelement (2) verbunden sind,
- ein inneres, eine Drehachse des Rotoraktivteils umschließendes, Ringelement (7), wobei zumindest eines der Hülsenelemente (3) über einen bezüglich der Drehachse radial verlaufenden Positionierungssteges (10) mit dem inneren Ringelement (7) verbunden ist.
- Hülsenelemente (3), Ringelement (7), äußeres Rahmenelement (2) und Positioniersteg bilden zusammen einen einteiligen Abstandshalter.

## Beschreibung

Die vorliegende Erfindung betrifft einen Abstandshalter zum Beabstanden von Elektroblechen bzw. Dynamoblechen eines belüfteten Rotoraktivteils dynamoelektrischen Maschine, wobei der Abstandshalter eine Vielzahl von Hülsenelementen aufweist. Darüber hinaus betrifft die vorliegende Erfindung ein Verfahren zum Herstellen eines derartigen Aktivteils.

Unter einem Rotoraktivteil einer dynamoelektrischen Maschine wird ein Rotor eines Elektromotors beziehungsweise eines Generators verstanden. Weiterhin fällt unter diesen Begriff aber beispielsweise auch ein Sekundärteil eines Linearmotors. Den Aktivteilen allgemein ist gemeinsam, dass sie durch Paketieren von Elektroblechen bzw. Dynamoblechen hergestellt werden.

Rotoraktivteile dynamoelektrischer Maschinen hoher Leistung müssen speziell gekühlt werden. Daher werden in den Blechpaketen häufig Kühlkanäle vorgesehen. Diese Kühlkanäle können in axialer, aber auch in radialer Richtung verlaufen. Bei Linearmotoren können sich die Kühlkanäle entlang der Längsachse, aber auch quer dazu erstrecken.

Verlaufen die Kühlkanäle parallel zu einer Ebene, die durch die Dynamobleche gebildet wird (z.B. radial bei rotatorischen Maschinen), so sind zwischen den Dynamoblechen entsprechende Abstandshalter vorzusehen. Bei Rotoren mit Kurzschlusskäfigen werden bekanntermaßen Hülsen als Abstandshalter eingesetzt, die zusammen mit Ausstanzungen in den Dynamoblechen axial verlaufende Hohlräume bilden, in welche durch Druckgussverfahren Kurzschlussstäbe aus Aluminium oder Kupfer eingegossen werden. Zwischen den Hülsen sind dann radial verlaufende Kühlkanäle ausgebildet.

Die Herstellung derartiger Abstandshalter mit Hülsen ist verhältnismäßig aufwändig. Zunächst ist jede Hülse aus einem Blechstreifen in einer separaten Maschine in eine annähernd ovale Form zu biegen. Die einzelne Hülse ist dann mittels Punktschweißen zu verschließen. Eine spezielle Schablone (erstes Deckblech) ist notwendig, um die verschlossenen Hülsen im Außenbereich der runden Schablone nebeneinander so auszurichten, dass zwischen ihnen Lüftungskanäle verbleiben. Jede Hülse wird dann mit einem Schweißpunkt auf der Schablone fixiert. Anschließend wird ein zweites Deckblech auf das mit Hülsen bestückte erste Deckblech aufgelegt und ausgerichtet. An jeder Hülse wird das zweite Deckblech mit mindestens vier Schweißpunkten mithilfe eines Punktschweißgeräts verbunden. Weiterhin müssen Doppel-T- bzw. I-Profile zur Versteifung und Stabilität des Rotors am Achsloch mit je zwei Schweißpunkten eingeschweißt werden, damit in das Blechpaket eine Welle eingepresst werden kann.

Es ist sofort ersichtlich, dass die Herstellung eines derartigen Abstandshalters zur radialen Belüftung eines Rotors sehr arbeitsaufwändig ist und sehr viele manuelle Arbeitsschritte notwendig sind. Insbesondere ist jede Hülse u.a. einzeln abzulängen, zu biegen, auszurichten und zu verschweißen. Bei der Fertigung eines typischen Rotors sind so beispielsweise über 3000 Schweißpunkte für die Herstellung der Abstandshalter notwendig. Darüber hinaus erfordern diese Abstandshalter sehr hohe Investitionskosten, beispielsweise für Biegemaschinen und Punktschweißgeräte.

Weiterhin birgt das Herstellungsverfahren der obigen Abstandshalter Risiken, die eine mindere Qualität der Abstandshalter zur Folge haben können. So führt beispielsweise die durch das Punktschweißverfahren entstehende Erwärmung häufig zur Welligkeit der Deckbleche. Außerdem entstehen durch den Druck der Elektroden Verformungen auf dem Abstandshalter. Durch die Welligkeit und die Lücken am Außendurchmesser der geschweißten Abstandshalter entstehen Luftkanalverengungen am Rotor, so dass der Kühlwirkungsgrad der dynamoelektrischen Maschine im Betrieb deutlich reduziert sein kann.

Die Aufgabe der vorliegenden Erfindung besteht somit darin, die Herstellung einer dynamoelektrischen Maschine mit Kühlkanälen in einem Rotoraktivteil zu vereinfachen und dabei eine gleichbleibende hohe Herstellungsqualität gewährleisten zu können.

Erfindungsgemäß wird diese Aufgabe gelöst durch einen Abstandshalter zum Beabstanden von Dynamoblechen eines Rotoraktivteils einer dynamoelektrischen elektrischen Maschine, mit folgenden Merkmalen:
- einer Vielzahl von Hülsenelementen wobei ein äußeres Rahmenelement die Hülsenelemente umgibt, und die Hülsenelemente mit dem äußeren Rahmenelement verbunden sind,
- ein inneres, eine Drehachse des Rotoraktivteils umschließendes Ringelement, wobei zumindest eines der Hülsenelemente über einen bezüglich der Drehachse radial verlaufenden Positionierungssteges mit dem inneren Ringelement verbunden ist.
- Hülsenelemente, Ringelement, äußeres Rahmenelement und Positioniersteg bilden zusammen einen einteiligen Abstandshalter.

Darüber hinaus wird erfindungsgemäß bereitgestellt ein Verfahren zum Herstellen eines Rotoraktivteils einer dynamoelektrischen Maschine durch
- Positionieren eines Abstandshalters nach einem der vorhergehenden Ansprüche zwischen einem ersten Dynamoblech und einem zweiten Dynamoblech oder einem ersten Dynamoblech und einer Endscheibe, oder einem ersten Stapel von Dynamoblechen und einem zweiten Stapel von Dynamoblechen, wodurch ein Blechpaket entsteht, und
- Abtragen einer äußeren Materialschicht des Blechpakets einschließlich zumindest eines Teils des äußeren Rahmenelements, so dass zwischen den Hülsenelementen nach außen offene Kühlkanäle entstehen.

In vorteilhafter Weise ist es durch den erfindungsgemäßen Abstandhalter möglich, auf die Arbeitsschritte des Hülsenbiegens und des Punktschweißens zu verzichten, um einen Abstandshalter für gekühlte Blechpakete, insbesondere eines Rotoraktivteils herzustellen. Das Abtragen des Rahmenelements, das die Hülsenelemente beim Paketieren und gegebenenfalls beim Druckguss für Kurzschlussstäbe in Position hält, wird bei der Oberflächenbearbeitung (z.B. Überdrehen des Rotorblechpakets) automatisch entfernt, ohne dass ein zusätzlicher Arbeitsschritt notwendig wäre.

Vorzugsweise besitzt der erfindungsgemäße Abstandshalter ein inneres, eine Drehachse des Aktivteils umschließendes Ringelement, wobei zumindest eines der Hülsenelemente über einen bezüglich der Drehachse radial verlaufenden Positionierungssteg mit dem inneren Ringelement gekoppelt ist. Damit lässt sich ein ringförmiger Abstandshalter einfach auf einer Welle positionieren und außerdem sorgt das Ringelement als Stützring für Stabilität im Achsbereich des Blechpakets.

Ebenso ist aber auch eine Positionierung über den Außendurchmesser möglich.

Weiterhin kann an einem der Drehachse des Rotoraktivteils zugewandten Bereich an einem, mehreren oder allen Hülsenelementen ein bezüglich der Drehachse radial verlaufender Luftleitsteg angeordnet sein. Derartige Luftleitstege haben außerdem die Funktion von Luftschaufeln und fördern die Kühlluft bei rotatorischer Bewegung durch die Zentrifugalkraft nach außen in den Luftspalt der dynamoelektrischen Maschine.

Ferner kann jedes Hülsenelement eine beliebige Form und Querschnitt, insbesondere einen ovalen Querschnitt aufweisen. Es ist besonders vorteilhaft, wenn die Ovale aus Linien gebildet sind, die in etwa in radialer Richtung eines ringförmigen Abstandshalters verlaufen. Dadurch ergibt sich außen eine größere Breite des Hülsenelements als innen. Wenn sich die Hülsenelemente so nur im äußeren radialen Bereich des ringförmigen Abstandshalters erstrecken, führt diese spezielle Hülsenform zu keiner markanten Verengung der radialen Lüftungskanäle zwischen den Hülsenelementen. Bei jeder Formgebung wird angestrebt, dass die Lüftungskanäle zwischen den Hülsenelementen, also jeder Lüftungskanal zwischen zwei Hülsenelementen in seinem radialen Verlauf einen gleichbleibenden Querschnitt aufweisen.

In dem Innenbereich jedes Hülsenelements kann weiterhin ein quer verlaufender Stabilisierungssteg angeordnet sein. Dieser stabilisiert die Hülse beim Gießverfahren, insbesondere bei Druckguss, so dass die definierten Lüftungskanäle zwischen den Hülsenelementen erhalten bleiben und keine Erweiterung, insbesondere der Ovalen in Umfangsrichtung erfolgt.

Der Abstandshalter kann beispielsweise mittels Laser-, Draht-, Wasserschneid- oder eines Gießverfahrens aus einem plattenförmigen Werkstück einteilig hergestellt werden. So lassen sich beispielsweise 4 mm starke einteilige, scheibenförmige Abstandshalter mit sehr hoher reproduzierbarer Qualität erhalten. Es ergibt sich somit insbesondere ein monolithischer, werkstoffeinstückiger Abstandshalter.

Beim Paketieren eines Rotoraktivteils durch eine axiale Abfolge von Elektroblechen oder Teilblechpaketen und Abstandshaltern oder mehreren auch axial direkt hintereinander angeordneten Abstandshalter der genannten Art und Endscheiben, lassen sich radiale Lüftungskanäle der gewünschten Größe in Paketierrichtung herstellen.

Gemäß einer speziellen Ausführungsform können in dem Blechpaket in Paketierrichtung durch die Hülsenelemente verlaufende Kanäle gebildet sein, die durch ein Gießverfahren, insbesondere Druckguss ausgegossen werden, um Kurzschlussstäbe für eine Kurzschlusswicklung zu bilden. Die Einzelbleche des Blechpakets weisen dann entsprechende Ausstanzungen auf. Die Hülsenelemente des Abstandshalters bilden dabei mit den Ausstanzungen der einzelnen Dynamobleche bzw. Elektrobleche dichte Kanäle, die beispielsweise mit Kupfer oder Aluminium ausgießbar sind.

Die vorliegende Erfindung wird nun anhand der beigefügten Zeichnungen näher erläutert, in denen zeigen:
- FIG 1: eine Draufsicht auf einen Abstandshalter für einen radial belüfteten Rotor;
- FIG 2: das Herstellen eines Blechpakets mit mehreren Ab- standshaltern nach FIG 1;
- FIG 3: einen Rotor mit Kurzschlussring und Welle sowie das Blechpaket von FIG 2 und

Das nachfolgend näher geschilderte Ausführungsbeispiel stellt eine bevorzugte Ausführungsform der vorliegenden Erfindung dar. Auch wenn sich das Beispiel lediglich auf einen radial belüfteten Rotor bezieht, ist das grundlegende Prinzip der vorliegenden Erfindung auch auf Statoren rotatorischer Maschinen sowie auf Primärteile und Sekundärteile von Linearmotoren anwendbar.

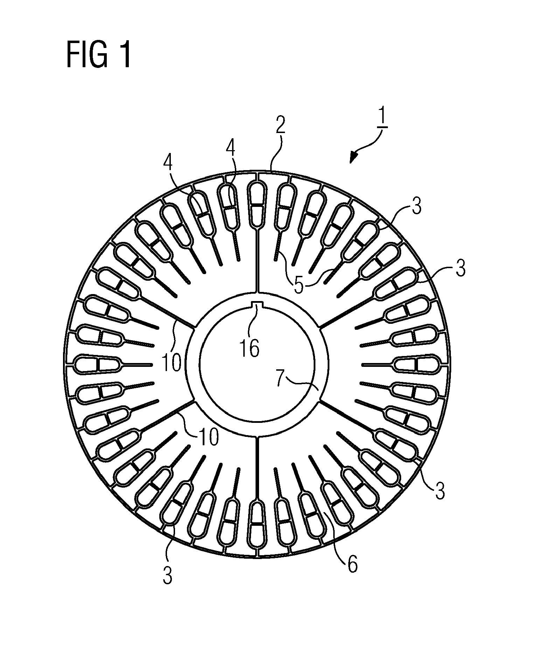

FIG 1 zeigt einen einteiligen Abstandshalter 1 zum Beabstanden von Dynamoblechen bzw. Elektroblechen des Blechpakets eines Rotors. Dynamobleche werden insbesondere bei Generatoren eingesetzt, während bei Elektromotoren eher allgemeiner von Elektroblechen gesprochen wird. Der Abstandshalter 1 ist ringförmig aufgebaut und besitzt einen äußeren Stützring 2 als Rahmenelement. An der Innenwand des äußeren Stützrings 2 sind zahlreiche Hülsenelemente als Stabhülsen 3 angeformt. Jede Stabhülse 3 ist im Wesentlichen oval geformt, wobei der spitzere Abschnitt zum Zentrum des ringförmigen Abstandshalters 1 weist. Die Stabhülsen 3 dienen dazu, Kurzschlussstäbe des Rotors aufzunehmen. Hierzu werden die Stabhülsen 3 mit ihren entsprechenden Aussparungen in den Blechpaketen 18 mit Aluminium oder Kupfer ausgegossen.

Vorteilhafterweise ist die Querschnittsform der Stabhülsen 3 der Querschnittsform der Kurzschlussstäbe des Rotors angepasst.

Zur Stabilisierung jeder ovalen beziehungsweise zapfenförmigen Stabhülse 3 ist etwa in deren Mitte ein Stabilisierungssteg 4 vorgesehen, der die leicht aufeinander zulaufenden, im Wesentlichen radial gerichteten gegenüberliegenden Wände einer Stabhülse 3 miteinander verbindet. Mit diesem Stabilisierungssteg 4 kann die Stabhülse 3 dem Druck insbesondere beim Druckgießen besser standhalten. Es tritt somit beim Gießvorgang keine Erweiterung der Stabhülse 3 in deren Umfangsrichtung ein, die einen radialen Kühlkanal 6 zwischen zwei benachbarten Stabhülsen im späteren Betrieb der dynamoelektrischen Maschine verengen könnte.

An der zum Zentrum weisenden Seite besitzt, beschränkt auf dieses Ausführungsbeispiel jede Stabhülse 3 einen Luftleitsteg 5. Die Funktion eines Luftleitstegs 5 besteht u.a. darin, aufgrund der Formgebung der Luftleitstege 5 als Luftschaufel gasförmige Kühlmedien durch die elektrische Maschine zu transportieren. Beim Drehen des Rotors nimmt jeder Luftleitsteg 5 nämlich die entsprechenden Luftmoleküle zunächst in Umfangsrichtung mit. Durch die Zentrifugalkraft wandern die Luftmoleküle radial nach außen, so dass beim Drehen des Rotors ein radial gerichteter Kühlstrom entsteht.

Benachbarte Stabhülsen 3 sind in einer bestimmten Entfernung voneinander beabstandet. Dadurch ergibt sich zwischen ihnen ein radial verlaufender Kühlkanal 6. Die von den Luftleitstegen 5 radial nach außen geförderte Luft dringt also durch die Kühlkanäle 6 radial nach außen. Dies ist allerdings nur dann möglich, wenn der äußere Stützring 2, der auch als Rahmenelement wird, entfernt worden ist.

Dieses Entfernen erfolgt vorteilhafterweise durch Abdrehen des gesamten Umfangs des Blechpakets 18 des Rotors am Ende des Herstellungsprozesses. In diesem Zustand sind die Stabhülsen 3 bereits ausgegossen und die Halterung dieser Stabhülsen 3 durch den äußeren Stützring 2 ist nicht mehr notwendig. Durch Abdrehen des Umfangs wird gleichzeitig auch der Stützring 2 entfernt.

Selbstverständlich kann der Stützring 2 auch separat abgetragen werden, ohne das Blechpaket zu bearbeiten.

Damit der Abstandshalter 1 zusammen mit anderen ringförmigen Dynamoblechen auf eine Achse paketiert werden kann, besitzt er einen inneren Stützring 7, mit dem der Abstandshalter 1 an der Welle 19 anliegt.

Außerdem besitzt der innere Stützring 7 eine nach innen gerichtete Positionierungsnut 16, so dass der Abstandshalter 1 drehfest und positionsgenau in seiner Winkellage gegenüber den Dynamoblechen platziert werden kann.

Damit der innere Stützring 7 zentrisch gegenüber dem äußeren Stützring 2 fixiert ist, sind einer oder mehrere Positionierungsstege 10 zwischen Stabhülsen 3 und dem inneren Stützring 7 vorgesehen. Im vorliegenden Fall ist zur Bildung eines Positionierungsstegs 10 jeder siebte Luftleitsteg radial nach innen bis zum inneren Stützring 7 verlängert und mit diesem einstückig verbunden.

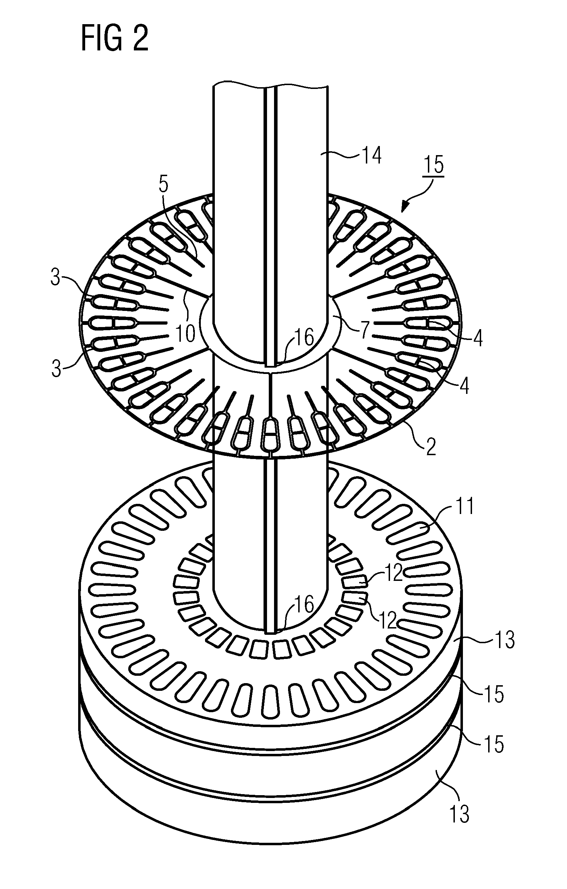

Der Abstandshalter 1 ist vorzugsweise aus einem mehrere Millimeter, insbesondere 6 mm starken Stahlblech mithilfe eines Lasers ausgeschnitten. Prinzipiell kann der Abstandshalter 1 aber auch aus einem Blech ausgestanzt werden. Um die notwendige axiale Höhe zu erreichen, können dann mehrere Abstandshalter 1 übereinandergelegt, also axial hintereinander angeordnet werden. Selbstverständlich können auch die mittels Laser ausgeschnittenen axial dickeren Abstandshalter 1 mehrfach übereinandergelegt werden (vergleiche FIG 2). Die kompletten Abstandshalterscheiben können auch durch andere Schneidtechniken hergestellt werden.

Entscheidend ist immer, dass die Abstandshalter 1 aus einem Material sind, und die angestrebte Form durch beliebige Fertigungsverfahren beispielsweise durch Laserschweißen oder Stanzen in einem Stück erstellt wird.

Der innere Stützring 7 hat nicht nur die Funktion, den äußeren Stützring 2 beziehungsweise die Stabhülsen 3 zu positionieren, sondern er hat auch die Funktion des Abstandhaltens der angrenzenden Dynamobleche und zwar speziell im Bereich der Welle 19, die in das Innere des inneren Stützrings 7 eingepresst wird.

Bei der Fertigung des Rotors werden die Dynamobleche zusammen mit den Abstandshaltern 1 gemäß FIG 2 paketiert. Die hier verwendeten Dynamobleche sind ringförmig und besitzen in ihrem Außenbereich Stabausstanzungen 11, deren Position und Geometrie denen der Stabhülsen 3 des Abstandshalters 1 entspricht. In ihrem Innenbereich besitzen die ringförmigen Dynamobleche Kühlkanalausstanzungen 12, die wie die Stabausstanzungen 11 in Umfangsrichtung gleichmäßig verteilt angeordnet sind. Bei der Paketierung ist in dem Anwendungsfall von FIG 2 ein Teilblechpaket 13 auf den Paketierdorn 14 aufgesteckt. Axial darüber befindet sich ein Abstandshalterpaar 15 bestehend aus zwei scheibenförmigen Abstandshaltern 1. Darüber befindet sich wieder ein Teilblechpaket 13, ein Abstandshalterpaar 15 und wiederum ein Teilblechpaket 13. Die einzelnen Dynamobleche besitzen ebenfalls Positionierungsnuten 16, so dass sie hinsichtlich ihrer Drehposition exakt übereinander angeordnet werden können. Die Teilblechpakete 13 sind so auch mit den einzelnen Abstandshaltepaaren 15 ausgerichtet. In dem Fertigungsschritt, der in FIG 2 dargestellt wird, wird ein weiteres Abstandshalterpaar 15 auf das oberste Teilblechpaket 13 aufgedrückt.

In einer weiteren nicht näher dargestellten Ausführungsform weisen die Abstandhalter 1, die ja die radialen Kühlkanäle 6 bilden, im Bereich der Stirnseiten des Rotors axial größere Abstände als in der Mitte des Rotors auf. Dadurch wird vergleichsweise wenig kühlere Luft dem Bereich der Stirnseiten zugebilligt, während in der Mitte des Rotors, der vergleichweise warm ist, eine erhöhte, wenn auch ggf. bereits vorgewärmte Kühlluftmenge zugeführt wird.

Die einzelnen Stabhülsen 3 sind exakt über den jeweiligen Stabausstanzungen 11 angeordnet. Die Kühlkanalausstanzungen 12 beziehungsweise die entsprechenden axial verlaufenden Kühlkanäle befinden sich radial außerhalb des inneren Stützrings 7. Die Luftstege 5 verlaufen radial in etwa bis zu den Kühlkanalausstanzungen 12. Jeder Luftleitsteg 5 endet an einer Trennwand zwischen zwei Kühlkanalausstanzungen 12. Somit kann Kühlluft eines Kühlkanals vom jeweiligen Luftleitsteg 5 mitgenommen und radial nach außen durch den jeweiligen Kühlkanal 6 transportiert werden.

Natürlich muss die Anzahl der Kühlkanalausstanzungen 12 nicht der Zahl der Stabhülsen 3 entsprechen. Es können auch einige wenige größere Kühlkanalausstanzungen mehreren radialen Kühlkanälen 6 zugeordnet sein.

Stabausstanzungen 12 und die Stabhülsen 3 liegen axial hintereinander, so dass sich entsprechende axiale Kanäle ergeben, die mit Kupfer, Aluminium oder anderen dafür geeigneten Materialien ausgegossen werden können, um die Kurzschlussstäbe zu bilden.

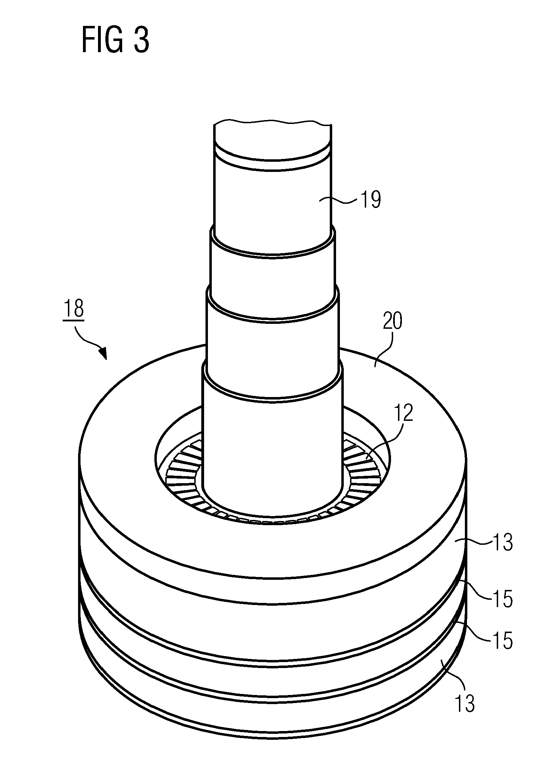

In FIG 3 ist das vollständige Blechpaket 18 nach dem Aluminiumgussprozess und dem Einpressen einer Welle 19 dargestellt. Flüssiges Aluminium ist in die Kanäle eingegossen worden, die durch die Stabausstanzungen 11 und die Stabhülsen 3 gebildet werden, so dass sich diese in bekannter Weise vollständig mit Aluminium gefüllt haben und nun Kurzschlussstäbe bilden. Auf die Stirnseite des Blechpakets wurde dabei auch ein Kurzschlussring 20 in üblicher Weise aufgegossen. Der Kurzschlussring 20 an der gegenüberliegenden Stirnseite des Blechpakets 18 ist in FIG 3 nicht dargestellt.

Es ist ein Rotoraktivteil entstanden, dass radiale Kühlkanäle 6 über die axiale Länge des Rotors verteilt aufweist, wobei die radialen Kühlkanäle durch axial verlaufende Kühlkanäle, die zwischen den Kurzschlussstäben und der Welle positioniert sind gespeist werden. Ein derartiges Rotoraktivteil bildet einen Teil einer nicht näher dargestellten dynamoelektrischen Maschine, wobei ein Stator u.a. ein Wicklungssystem aufweist.

Nun kommt ein für die vorliegende Erfindung wesentlicher Produktionsschritt, es wird das äußere Rahmenelement 2 der Abstandshalter 1 abgetragen. Dies erfolgt beispielsweise durch Überdrehen des auf die Welle 19 aufgepressten Blechpakets 18. Dabei wird der äußere Stützring 2 mit abgetragen. Durch das Abdrehen der äußeren Stützringe 2 werden die radialen Kühlkanäle 6 sichtbar.

Auch ein separates Abtragen des äußeren Stützrings 2 ist möglich, ohne das Blechpaket spanabhebend zu bearbeiten.

Bei der Herstellung von Statoren können Stützringe beispielsweise beim Ab- bzw. Ausdrehen der Statoraußen- und/oder -innenfläche abgedreht werden. Bei der Herstellung von Linearmotoren lassen sich entsprechende Rahmenelemente, die etwaige Hülsen halten, beispielsweise abfräsen.

Das Paketieren und das Überdrehen des Blechpakets 18 sind Fertigungsschritte, die bei der Fertigung jedes Rotors durchgeführt werden. Die aus dem Stand der Technik bekannten speziellen Fertigungsschritte für den radial belüfteten Rotor, nämlich das Biegen von Hülsenblechen sowie das Ausrichten und Verschweißen dieser Hülsenelemente, entfallen jedoch.

Es ist lediglich notwendig, den Abstandshalter 1 als solchen beispielsweise durch Laserschneiden herzustellen. Diese Herstellung ist jedoch wegen des geringeren Zeitaufwands erheblich kostengünstiger. Für das Laserschneiden können in der Regel Laser-Anlagen verwendet werden, die für andere Zwecke bereits zur Verfügung stehen. Weiterhin hat die Laserfertigung den Vorteil, dass die Kontur der Abstandshalter 1 leicht für andere Motorvarianten abänderbar ist.

Die erfindungsgemäß hergestellten Abstandshalter haben den weiteren wesentlichen Vorteil der höheren Genauigkeit. Dadurch ergeben sich bei der Fertigung geringere Fehlerquellen und somit eine hohe Zeit- bzw. Kostenersparnis bei der Herstellung. Weiterhin kann eine bessere Belüftung durch geringeren Platzbedarf der Abstandshalter und eine verminderte Querschnittsverengung der radialen Kühlkanäle 6 gegenüber auf bekannte Weise hergestellten Rotoren gewährleistet werden.

Eine alternative Ausführungsform der Erfindung, die aber auch auf den vorliegenden Grundgedanken der Einstückigkeit des Abstandshalter für derartige Rotoraktivteile aufbaut ist, ist, den Abstandshalter so auszuführen, dass jedes Hülsenelement über genau einen Positioniersteg an einem inneren Stützring fixiert ist. Dieser Positionierungssteg ist gleichzeitig dann als Luftleitsteg ausgeführt. Das äußere Rahmenelement entfällt. Damit entfällt auch das Abtragen des äußeren Rahmenelements um radiale Kühlkanäle 6 zu erhalten. Die Vorteile bleiben erhalten, es wird nur der Herstellungsschritt des Abtragens des äußeren Rahmenelements eingespart.

## Patentansprüche

1. Abstandshalter (1) zum Beabstanden von Dynamoblechen (23) eines Rotoraktivteils einer dynamoelektrischen elektrischen Maschine, mit folgenden Merkmalen:
- einer Vielzahl von Hülsenelementen (3) wobei ein äußeres Rahmenelement (2) die Hülsenelemente (3) umgibt, und die Hülsenelemente (3) mit dem äußeren Stützring (2) verbunden sind,
- ein inneres, eine Drehachse des Rotoraktivteils umschließendes, Ringelement (7), wobei zumindest eines der Hülsenelemente (3) über einen bezüglich der Drehachse radial verlaufenden Positionierungssteges (10) mit dem inneren Ringelement (7) verbunden ist.
- Hülsenelemente (3), Ringelement (7), äußerer Stützring (2) und Positioniersteg bilden zusammen einen einteiligen Abstandshalter.

2. Abstandshalter nach Anspruch 1, wobei an einem der Drehachse des Rotoraktivteils zugewandten Bereich zumindest einige Hülsenelements (3) ein bezüglich der Drehachse radial verlaufenden Luftleitsteg (5) aufweisen.

3. Abstandshalter nach einem der vorhergehenden Ansprüche, wobei jedes Hülsenelement (3) einen vorgebbaren, insbesondere ovalen Querschnitt aufweist.

4. Abstandshalter nach einem der vorhergehenden Ansprüche, wobei in einem Innenbereich einer oder mehrerer Hülsenelemente (3) ein quer verlaufender Stabilisierungssteg (4) angeordnet ist.

5. Verfahren zum Herstellen eines Rotoraktivteils einer dynamoelektrischen Maschine durch
- Positionieren eines Abstandshalters (1) nach einem der vorhergehenden Ansprüche zwischen einem ersten Dynamoblech und einem zweiten Dynamoblech oder einem ersten Dynamoblech und einer Endscheibe, oder einem ersten Stapel von Dynamoblechen und einem zweiten Stapel von Dynamoblechen, wodurch ein Blechpaket (18) entsteht, und
- Abtragen des äußeren Stützrings (2), so dass zwischen den Hülsenelementen (3) radial nach außen offene Kühlkanäle (6) entstehen.

6. Verfahren nach Anspruch 5, wobei der Abstandshalter (1) aus einem plattenförmigen Werkstück mittels Laser-, Draht-, Wasserschneid- oder eines Gießverfahrens einteilig hergestellt wird.

7. Verfahren nach Anspruch 5 oder 6, wobei beim Paketieren mehrere Abstandshalter (1) der genannten Art axial hintereinander angeordnet werden.

8. Verfahren nach einem der Ansprüche 5 bis 7, wobei in dem Blechpaket (18) in Paketierrichtung durch die Hülsenelemente (3) verlaufende Kanäle (17) gebildet sind, die durch Druckguss, insbesondere Aluminium oder Kupfer ausgegossen werden, um Kurzschlussstäbe für eine Kurzschlusswicklung des Rotors zu bilden.

9. Rotoraktivteil einer dynamoelektrischen Maschine hergestellt nach einem Verfahren nach einem der Ansprüche 5 bis 8 mit zumindest einem Abstandshalter (1) nach einem der Ansprüche 1 bis 4.

10. Dynamoelektrische Maschine mit einem Rotoraktivteil nach Anspruch 9.
